# EUROPÄISCHE PATENTANMELDUNG

(11) **EP 1 901 040 A2**
(43) Veröffentlichungstag der Anmeldung: **19.03.2008**
(21) Anmeldenummer: 07114814.2
(22) Anmeldetag: 23.08.2007
(51) Int. Cl.: G01D 5/14

(54) **Berührungsloser Drehwinkelsensor**

(30) Priorität: 14.09.2006 DE 102006043291
(71) Anmelder: ZF Friedrichshafen AG, 88038 Friedrichshafen (DE)
(72) Erfinder: Glaser, Reiner, 88682, Salem (DE); Scharnagel, Günther, 88239, Wangen (DE)

(57) **Zusammenfassung**

Es wird ein berührungsloser Drehwinkelsensor zum Erfassen des Drehwinkels einer Welle (7) bzw. eines zu detektierenden Bauteils (38) vorgeschlagen, umfassend ein Hallelement (4), ein Elektronikgehäuse (1), in dem die Elektronik (2) des Sensors angeordnet ist, ein Sensorgehäuse (11) und einen Magneten (6) zur Wechselwirkung mit dem das Hallelement (4) aufweisenden Rotor (5), bei dem im Sensorgehäuse (11) das Hallelement (4) gekapselt angeordnet ist, wobei der Rotor (5) außerhalb des Sensorgehäuses (10) auf der gelagerten Welle (7), deren Drehwinkel erfasst werden soll und koaxial dazu bzw. auf dem zu detektierenden Bauteil (38) montiert ist.

## Beschreibung

Die vorliegende Erfindung bezieht sich auf einen berührungslosen Drehwinkelsensor gemäß dem Oberbegriff des Patentanspruchs 1. Des weiteren bezieht sich die Erfindung auf die Verwendung des erfindungsgemäßen berührungslosen Drehwinkelsensors bei einem verstellbaren Radialkolbenmotor insbesondere bei einem verstellbaren Radialkolbenmotor eines hydrostatischmechanischen Getriebes.

Berührungslose Drehwinkelsensoren sind aus dem Stand der Technik bekannt. Sie umfassen einen in einem Sensorgehäuse gelagerten Rotor, der mit dem rotierenden Bauteil, dessen Drehwinkel erfasst werden soll, drehfest verbunden ist, und einen Stator, welcher in der Regel einen Hallsensor aufweist. Der Rotor weist Magnete auf, die ein Magnetfeld erzeugen, welches zum Entstehen einer Hall-Spannung am Hallsensor führt, die entsprechend verstärkt ein Ausgangssignal ergibt, welches dem Drehwinkel des Rotors entspricht.

Dieser Aufbau weist den Nachteil der zweifachen Lagerung auf, da zum einen der Rotor im Sensorgehäuse gelagert ist und zum anderen die Welle, deren Drehwinkel erfasst werden soll, ebenfalls gelagert werden muss. Durch Einbautoleranzen treten, sobald die Achsen der zwei Lager nicht in einer Flucht liegen, Querkräfte auf, weiche in nachteiliger Weise in einem erhöhten Verschleiß des in der Regel schwächer als das Wellenlager ausgebildeten Lagers des Rotors des Drehwinkelsensors resultieren, was auch zu einem Sensorausfall führen kann.

Im Vergleich zu einem nicht berührungslosen Sensor, wie er z.B. im Rahmen der DE 10 2004 048 174 A1 der Anmelderin offenbart ist, weisen berührungslose Drehwinkelsensoren weniger bewegliche Teile auf und sind in der Regel bei minimalem Verschleiß zuverlässiger.
Aus der DE 10 2004 048 174 A1 der Anmelderin ist eine Einrichtung zur Bestimmung des Schluckvolumens eines verstellbaren Radialkolbenmotors eines hydrostatisch - mechanischen Getriebes bekannt, welche einen Drehwinkelgeber umfasst, welcher an einen drehbar gelagerten Zylinder des Radialkolbenmotors angeschlossen ist, wobei der Drehwinkel, der aus der Beaufschlagung des Zylinders resultiert, proportional zum aktuellen Schluckvolumen des Radialkolbenmotors ist. Bei der DE 10 2004 048 174 A1 ist der Drehwinkelgeber analog ausgeführt; die Sensorwelle des Drehwinkelgebers ragt in eine im Zylinder vorgesehene Bohrung hinein und wird vom einem in der Bohrung vorgesehenen O-Ring mitgenommen.

Aus der DE 102004023631 A1 der Anmelderin ist ein hydrostatisch - mechanisches Getriebe bekannt, welches zwei hydraulische Motoren aufweist, die über ein Summierungsgetriebe eine Abtriebswelle antreiben, wobei das Summierungsgetriebe und die Motoren innerhalb des Getriebegehäuses angeordnet sind.

Der vorliegenden Erfindung liegt die Aufgabe zugrunde, einen berührungslosen Drehwinkelsensor anzugeben, bei dem die erwähnten Nachteile der aus dem Stand der Technik bekannten Konstruktionen vermieden werden. Insbesondere soll der Verschleiß des Sensors minimiert werden und eine sehr genaue Positionierung des Sensors ermöglicht werden. Des weiteren soll die Verwendung des erfindungsgemäßen berührungslosen Drehwinkelsensors bei einem verstellbaren Radialkolbenmotor, insbesondere in einem hydrostatischmechanischen Getriebe beschrieben werden.

Diese Aufgabe wird für einen berührungslosen Drehwinkelsensor durch die Merkmale des Patentanspruchs 1 gelöst; eine vorteilhafte Verwendung des berührungslosen Drehwinkelsensors bei einem Radialkolbenmotor ist Gegenstand des Patentanspruchs 4. Weitere erfindungsgemäße Ausgestaltungen und Vorteile gehen aus den entsprechenden Unteransprüchen hervor.

Demnach wird ein berührungsloser Drehwinkelsensor mit einem Hallelement vorgeschlagen, umfassend ein Elektronikgehäuse und ein Sensorgehäuse, in dem das Hallelement gekapselt angeordnet ist, wobei der Rotor, der Magnete zur Wechselwirkung mit dem Hallelement aufweist, außerhalb des Sensorgehäuses auf der gelagerten Welle, deren Drehwinkel erfasst werden soll und koaxial dazu bzw. auf dem zu detektierenden Bauteil montiert ist. Dadurch dass eine separate Lagerung des Rotors entfällt, führt eine eventuell auftretende Schrägstellung der Welle nicht zu einem Verschleiß des Sensors.

Für den Fall, dass die Welle bzw. das zu detektierende Bauteil von einem Gehäuse umgeben ist, an dem die Lagerung der Welle bzw. des Bauteils montiert ist und der Innenraum des Gehäuses abgedichtet werden soll (beispielsweise, wenn die Umgebung der Welle ölumspült sein soll oder mit Druck beaufschlagt ist), ist gemäß der Erfindung zwischen dem Elektronikgehäuse des Sensors und dem die Welle umgebenden Gehäuse ein Dichtelement, beispielsweise ein O-Ring, zur Abdichtung des innenraums des Gehäuses nach außen vorgesehen.

Gemäß der Erfindung ist das Hallelement durch das Sensorgehäuse gegen Umwelteinflüsse geschützt. Weil die Bearbeitung der Wellenlagerung und der Zentrierung des Sensors auf einer Achse liegen, kann der Sensor selbst bei unterschiedlichen Durchmessern sehr genau positioniert werden. Zusätzlich kann nach der Montage ein Abgleich in der Steuerung vorgenommen werden, um eine höhere Genauigkeit zu erreichen.

Der erfindungsgemäße Drehwinkelsensor kann in vorteilhafter Weise der Erfassung des Drehwinkels eines Zylinders eines Radialkolbenmotors dienen, wobei der Drehwinkel proportional zum aktuell eingestellten Schluckvolumen des Radialkolbenmotors ist. Hierbei kann das Signal des Sensors als Regelgröße zum Regeln des Schluckvolumens dienen.

Insbesondere wird vorgeschlagen, den erfindungsgemäßen Drehwinkelsensor zur Erfassung des Drehwinkels in einem hydrostatisch - mechanischen Getriebe, umfassend zumindest einen verstellbaren Radialkolbenmotor einzubauen.

Die Erfindung wird im Folgenden anhand der beigefügten Figuren beispielhaft näher erläutert.
Es zeigen:
- Figur 1:: eine schematische Schnittansicht eines berührungslosen Drehwinkelsensors nach dem Stand der Technik;
- Figur 2:: eine schematische Schnittansicht eines berührungslosen Drehwinkelsensors gemäß der vorliegenden Erfindung:
- Figur 3:: einen Schnitt durch die verstellbaren Radialkolbenmotoren eines hydrostatisch - mechanischen Getriebes umfassend zwei Radialkolbenmotoren,
- Figur 4: eine schematische Schnittansicht der Anordnung des erfindungsgemäßen Sensors in einem Radialkolbenmotor zur Erfassung des Drehwinkels eines Zylinders;
- Figur 5:: einen Schnitt entlang der Linie C-C aus Figur 3 und eine Detailansicht der Anordnung des erfindungsgemäßen Sensors zur Messung des Drehwinkels eines Zylinders des Radialkolbenmotors und
- Figur 6:: eine Draufsicht auf ein hydrostatisch - mechanisches Getriebe umfassend zwei Radialkolbenmotoren, bei dem gemäß der Erfindung ausgeführte Sensoren zur Messung des Drehwinkels jeweils eines Zylinders der Drehwinkels jeweils eines Zylinders der Radialkolbenmotore vorgesehen sind.

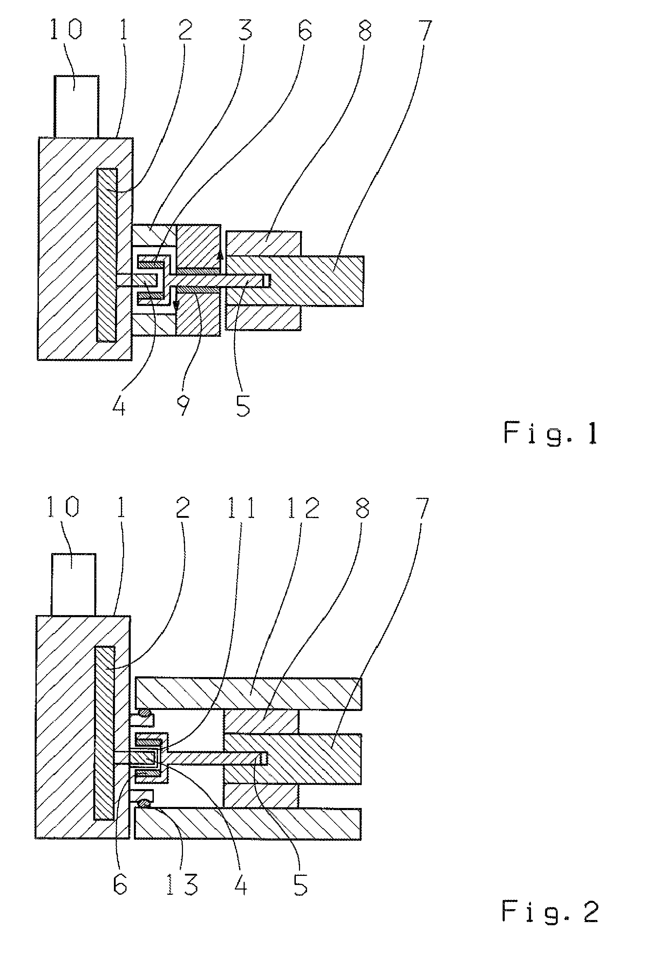

Der in Figur 1 dargestellte berührungslose Drehwinkelsensor nach dem Stand der Technik umfasst ein Elektronikgehäuse 1, in dem die Sensorelektronik 2 angeordnet ist, und ein Sensorgehäuse 3, in dem das Hallelement 4 und der Rotor 5, welcher zur Wechselwirkung mit dem Hallelement 4 Magnete 6 aufweist, angeordnet sind.

Wie aus Figur 1 ersichtlich, ist der Rotor 5 im Sensorgehäuse 3 über ein Lager 9 gelagert und mit der Welle 7, deren Drehwinkel erfasst werden soll, drehfest verbunden, wobei die Welle 7 außerhalb des Sensorgehäuses 3 über ein Lager 8 gelagert ist. Der Stecker zum Anschließen an eine Steuerung ist in der Figur mit dem Bezugszeichen 10 versehen.

Bei dieser Konstruktion kann es vorkommen, dass, sobald die Achsen der zwei Lager 9, 8 nicht in einer Flucht liegen, Querkräfte auftreten, die in einem erhöhten Verschleiß des in der Regel schwächer als das Wellenlager 8 ausgebildeten Lagers 9 des Rotors 5 resultieren, Die Querkräfte sind in der Figur durch die Pfeile veranschaulicht.

Um dieses Problem zu lösen, wird gemäß der Erfindung ein Sensor vorgeschlagen, bei dem lediglich eine Lagerung für den Rotor und die damit verbundene Welle erforderlich ist. Eine besonders vorteilhafte Ausführungsform des erfindungsgemäßen Sensors ist Gegenstand der Figur 2.

Bezug nehmend auf Figur 2 umfasst der erfindungsgemäße berührungslose Drehwinkelsensor ein Elektronikgehäuse 1, in dem die Sensorelektronik 2 angeordnet ist, und ein nichtmagnetisches Sensorgehäuse 11, in dem das Hallelement 4 gekapselt angeordnet ist, wobei der Rotor 5, umfassend Magnete 6 zur Wechselwirkung mit dem Hallelement 4, außerhalb des Sensorgehäuses 11 auf der Welle 7 montiert ist, deren Drehwinkel erfasst werden soll. Somit ist nur eine Lagerung erforderlich, nämlich die Lagerung 8 der Welle 7; mit 12 ist in der Figur das Gehäuse bezeichnet, das die Welle 7 umgibt, an dem die Lagerung 8 der Welle 7 befestigt ist. Durch die erfindungsgemäße Konzeption entfällt eine separate Lagerung des Rotors 5, so dass eine eventuell auftretende Schrägstellung der Welle 7 nicht zu einem Verschleiß des Sensors führt.

Für den Fall, dass der Innenraum des Gehäuses 12 abgedichtet werden soll, was z.B. der Fall ist, wenn die Umgebung der Welle 7 ölumspült oder druckbeaufschlagt ist, kann ein Dichtelement 13, beispielsweise ein O-Ring, zwischen dem Elektronikgehäuse 1 des Sensors und dem Gehäuse 12, das die Welle 7 umgibt, zur Abdichtung des ölhaltigen oder druckbeaufschlagten Innenraums des Gehäuses 12 nach außen vorgesehen sein; wie aus Figur 2 ersichtlich, erstreckt sich in diesem Fall das Gehäuse 12 axial betrachtet bis zum Elektronikgehäuse 1 des Sensors.

Der erfindungsgemäße Sensor kann in vorteilhafter Weise in einem hydrostatisch - mechanischen Getriebe, umfassend zumindest einen verstellbaren Radialkolbenmotor eingebaut werden, um den Drehwinkel eines Zylinders des Radialkolbenmotors zu erfassen, wobei der Drehwinkel proportional zum aktuell eingestellten Schluckvolumen des Radialkolbenmotors ist. Hierbei kann das Signal des Sensors als Regelgröße zum Regeln des Schluckvolumens dienen.

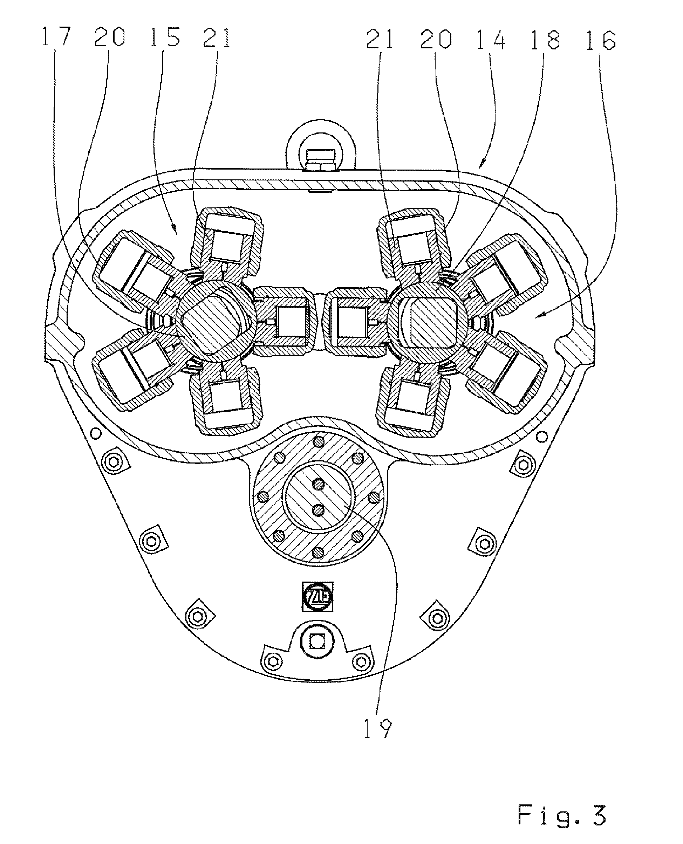

In Figuren 3, 4, 5 und 6 ist dies anhand eines hydrostatisch - mechanischen Getriebes mit zwei verstellbaren Radialkolbenmotoren veranschaulicht.

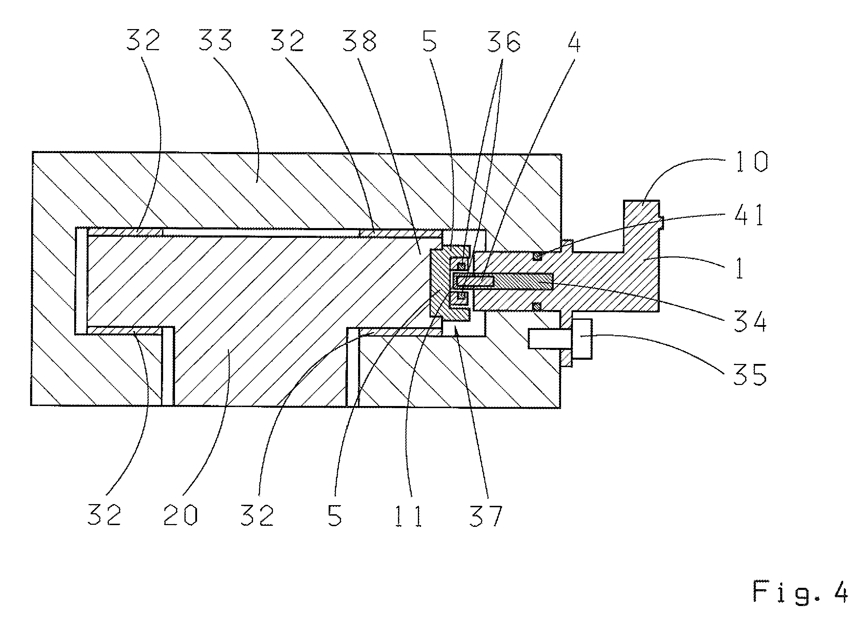

In Figur 3 ist ein Schnitt durch die verstellbaren Radialkolbenmotoren eines hydrostatisch - mechanischen Getriebes umfassend zwei Radialkolbenmotoren gezeigt. Das Getriebe 14 weist zwei Radialkolbenmotoren 15, 16 auf, die jeweils eine als Kurbelwelle 17 bzw, 18 ausgebildete Abtriebswelle aufweisen, wobei jede Abtriebswelle 17, 18 jeweils über eine Stirnradstufe mit der Abtriebswelle 19 des Getriebes 14 wirkverbunden ist. Jeder Motor 15, 16 umfasst mehrere Zylinder 20, wobei in den Zylindern jeweils ein Kolben 21 axial beweglich angeordnet ist; die Kolben 21 werden in den Zylindern 20 durch einen exzentrisch ausgebildeten Abschnitt der Kurbelwelle 17 bzw. 18 bewegt. Des weiteren weisen die Zylinder 20 Gleitlager auf, über die die Zylinder 20 drehbar gelagert sind, die mit dem erfindungsgemäßen Sensor zur Ermittlung des Schluckvolumens zusammenwirken, wie anhand Figur 4 erläutert.

In Figur 4 ist ein Zylinder 20 eines verstellbaren Radialkolbenmotors dargestellt, welcher in einem Getriebegehäuse 33 über Gleitlager 32 drehbar gelagert ist. Gemäß der Erfindung sind das Elektronikgehäuse 1 des Sensors 34 und das im Gehäuse 11 angeordnete Hallelement 4 im Gehäuse 33 des Getriebes befestigt, beispielsweise über eine oder mehrere Schraube(n) 35. Der Rotor 5, umfassend einen Magneten bzw. ein Magnetpaar 36 ist an dem zu detektierenden Bauteil 38 befestigt, wobei der Magnet 36 in einem Magnetträger 37 eingebettet ist. Vorzugsweise ist der Magnet 36 mit Kunststoff umspritzt; der Magnetträger ist am zu detektierenden Bauteil 38 befestigt, wobei dies vorzugsweise über eine Presspassung erfolgen kann.

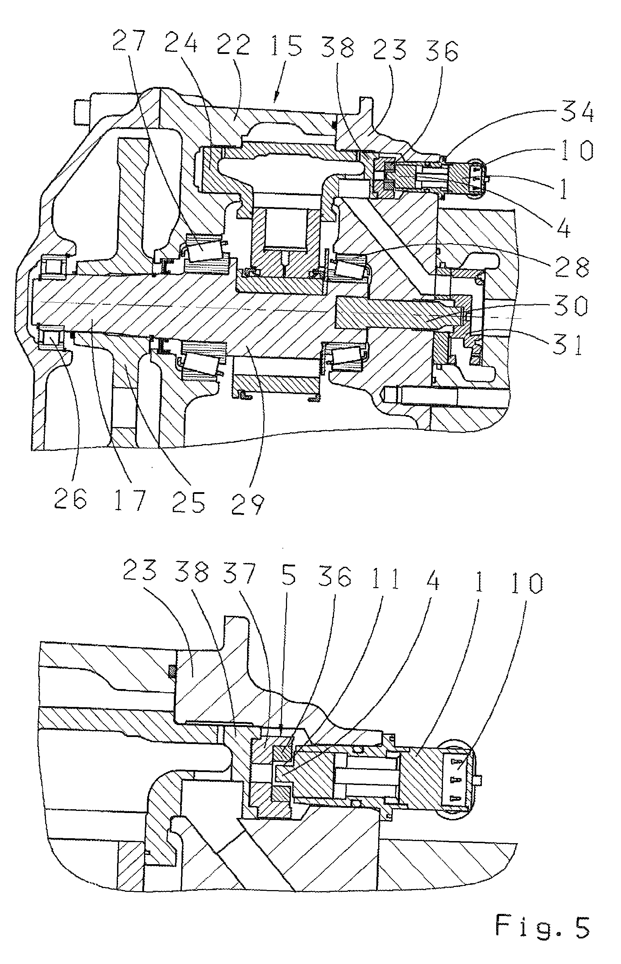

Wie aus Figur 4 ersichtlich, kann der Übergang vom Sensor 34 zum Getriebegehäuse 33 über ein Dichtelement 41, vorzugsweise über einen O-Ring abgedichtet werden. Ein Beispiel einer derartigen Anordnung des Sensors in einem hydrostatisch - mechanischen Getriebe ist Gegenstand der Figur 5.

In Figur 5 ist ein Zylinder 20 eines verstellbaren Radialkolbenmotors 15 gezeigt, welcher in einem Gehäuseteil 22 und in einem weiteren Gehäuseteil 23 über Lagerzapfen 24 gelagert ist. Die Kurbelwelle 17 ist über eine Stirnradstufe 25 mit der nicht dargestellten Abtriebswelle wirkverbunden und über drei Lagerstellen 26, 27, 28 gelagert, wobei die Lagerstelle 27 zwischen der Stirnradstufe 25 und dem exzentrischen Abschnitt 20 der Kurbelwelle 17 angeordnet ist, so dass die Stirnradstufe 25 und der exzentrische Abschnitt 29 zwischen den Lagerstellen 26 und 28 angeordnet sind. Bei der gezeigten Anordnung treibt die Kurbelwelle 17 über eine Zwischenwelle 30, die mit der Kurbelwelle 17 einstückig ausgebildet sein kann, einen Druckmittelverteiler 31 an.

Gemäß der Erfindung umfasst der Sensor 34 zwei getrennte Bauteile, nämlich den Magnetträger 37, welcher den Magneten 36 umfasst und mit dem zu detektierenden Bauteil drehfest verbunden ist und das Elektronikgehäuse 1 mit dem in einem Gehäuse 11 angeordneten Hallelement 4. Der Magnetträger 37 mit dem Magneten 36 ist mit dem zu detektierenden Bauteil 38 drehfest verbunden; im vorliegenden Beispiel ist das Elektronikgehäuse 1 über eine Presspassung mit dem Getriebegehäuseteil 23 verbunden. Dies wird insbesondere anhand der unteren Teilfigur in Figur 5 veranschaulicht, weiche eine Detailansicht des Teiles D der oberen Teilfigur ist.

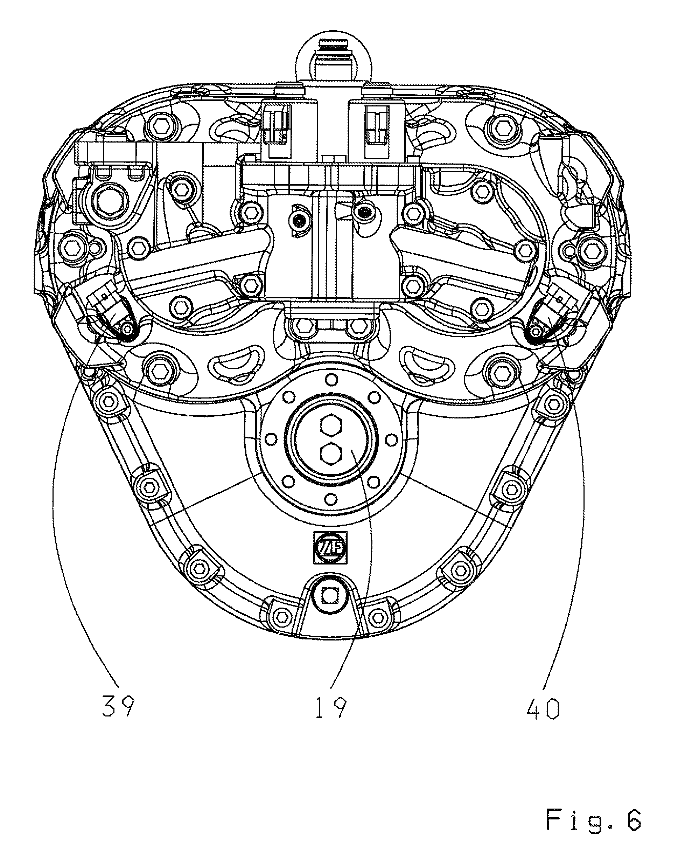

In Figur 6 ist die Anordnung von zwei erfindungsgemäßen Sensoren 39, 40 in einem hydrostatisch - mechanischen Getriebe, umfassend zwei verstellbare Radialkolbenmotore veranschaulicht.

Selbstverständlich fällt auch jede konstruktive Ausbildung, insbesondere jede räumliche Anordnung der Bauteile des erfindungsgemäßen berührungslosen Drehwinkelsensors an sich sowie zueinander und soweit technisch sinnvoll, unter den Schutzumfang der vorliegenden Ansprüche, ohne die Funktion des Drehwinkelsensors, wie sie in den Ansprüchen angegeben ist, zu beeinflussen, auch wenn diese Ausbildungen nicht explizit in den Figuren oder in der Beschreibung dargestellt sind. Auch kann die der Erfindung zugrundeliegende Konzeption auf weitere Ausgestaltungen berührungsloser Sensoren angewandt werden.

### Bezugszeichen

- 1: Elektronikgehäuse
- 2: Elektronik
- 3: Sensorgehäuse
- 4: Hallelement
- 5: Rotor
- 6: Magnet
- 7: Welle
- 8: Lager der Welle
- 9: Lager des Rotors
- 10: Stecker
- 11: Sensorgehäuse
- 12: Gehäuse
- 13: Dichtung
- 14: Getriebe
- 15: Radialkolbenmotor
- 16: Radialkolbenmotor
- 17: Kurbelwelle
- 18: Kurbelwelle
- 19: Abtriebswelle
- 20: Zylinder
- 21: Kolben
- 22: Gehäuseteil
- 23: Gehäuseteil
- 24: Lagerzapfen
- 25: Stirnradstufe
- 26: Lagerstelle
- 27: Lagerstelle
- 28: Lagerstelle
- 29: exzentrischer Abschnitt der Kurbelwelle
- 30: Zwischenwelle
- 31: Druckmittelverteiler
- 32: Gleitlager
- 33: Getriebegehäuse
- 34: Sensor
- 35: Schraube
- 36: Magnetpaar, Magnet
- 37: Magnetträger
- 38: zu detektierendes Bauteil
- 39: Sensor
- 40: Sensor
- 41: Dichtelement

## Patentansprüche

1. Berührungsloser Drehwinkelsensor zum Erfassen des Drehwinkels einer Welle (7) bzw. eines zu detektierenden Bauteils (38), mit einem Hallelement (4), umfassend ein Elektronikgehäuse (1), in dem die Elektronik (2) des Sensors angeordnet ist, ein Sensorgehäuse (11) und einen Rotor (5), umfassend einen Magneten (6) zur Wechselwirkung mit dem Hallelement (4), **dadurch gekennzeichnet, dass** in dem Sensorgehäuse (11) das Hallelement (4) gekapselt angeordnet ist, wobei der Rotor (5) außerhalb des Sensorgehäuses (10) auf der gelagerten Welle (7), deren Drehwinkel erfasst werden soll und koaxial dazu bzw. auf dem zu detektierenden Bauteil (38) montiert ist.

2. Berührungsloser Drehwinkelsensor zum Erfassen des Drehwinkels einer Welle (7) nach Anspruch 1, **dadurch gekennzeichnet, dass** für den Fall, dass die Welle (7) bzw. das zu detektierende Bauteil (38) von einem Gehäuse (12) umgeben ist, an dem die Lagerung (8) der Welle (7) bzw. des zu detektierenden Bauteils (38) montiert ist, und der Innenraum des Gehäuses (12) abgedichtet werden soll, ein Dichtelement (13) zwischen dem Elektronikgehäuse (1) des Sensors und dem Gehäuse (12) zur Abdichtung des Innenraums des Gehäuses (12) nach außen vorgesehen ist.

3. Berührungsloser Drehwinkelsensor zum Erfassen des Drehwinkels einer Welle (7) nach Anspruch 2, **dadurch gekennzeichnet, dass** das Dichtelement (13) zwischen dem Elektronikgehäuse (1) des Sensors und dem Gehäuse (12) als O-Ring ausgebildet ist.

4. Verwendung eines berührungslosen Drehwinkelsensors nach einem der Ansprüche 1 bis 3, bei einem verstellbaren Radialkolbenmotor (15, 16), insbesondere bei einem verstellbaren Radialkolbenmotor (15, 16) eines hydrostatisch-mechanischen Getriebes (14) zur Erfassung des Drehwinkels eines Zylinders (20) des Radialkolbenmotors, wobei der Drehwinkel proportional zum aktuell eingestellten Schluckvolumen des Radialkolbenmotors ist.

5. Verwendung eines berührungslosen Drehwinkelsensors nach Anspruch 4, **dadurch gekennzeichnet, dass** das Elektronikgehäuse (1) des Sensors (34) und das im Gehäuse (11) angeordnete Hallelement (4) im Gehäuse (33) des Getriebes (14) befestigt sind, wobei der Rotor (5), umfassend einen Magneten bzw. ein Magnetpaar (36) an dem zu detektierenden Bauteil (38) befestigt ist.

6. Verwendung eines berührungslosen Drehwinkelsensors nach Anspruch 5, **dadurch gekennzeichnet, dass** der Magnet (36) in einem Magnetträger (37) eingebettet ist, der mit dem zu detektierenden Bauteil (38) verbunden ist.

7. Verwendung eines berührungslosen Drehwinkelsensors nach Anspruch 6, **dadurch gekennzeichnet, dass** der Magnetträger (37) über eine Presspassung am zu detektierenden Bauteil (38) befestigt ist.

8. Verwendung eines berührungslosen Drehwinkelsensors nach Anspruch 5, 6 oder 7, **dadurch gekennzeichnet, dass** der Magnet (36) mit Kunststoff umspritzt ist.
